# EUROPEAN PATENT APPLICATION

(11) **EP 2 541 709 A2**
(43) Date of publication of application: **02.01.2013**
(21) Application number: 11747601.0
(22) Date of filing: 14.02.2011
(51) Int. Cl.: H02G 3/30, F16B 2/08

(54) **LENGTH-ADJUSTABLE CABLE TIE CAPABLE OF ELIMINATING THE WASTE THEREOF**

(30) Priority: 25.02.2010 KR 20100016958
(71) Applicant: Lee, Young Jong, Gyeongbuk 791-921 (KR); Hong, Jun Pyo, Gyeongbuk 791-921 (KR)
(72) Inventor: Lee, Young Jong, Gyeongbuk 791-921 (KR); Hong, Jun Pyo, Gyeongbuk 791-921 (KR)
(74) Representative: Pulieri, Gianluca Antonio
(86) International application number: PCT/KR2011/000974
(87) International publication number: WO 2011/105711

(57) **Abstract**

Disclosed is a cable tie used for the purpose of tying and arranging cables, and it is formed of a belt part 310 which is stored in the shape of a reel 370 at usual time and is unwound for tying cables when needed, and engaging head parts 320 and 420 fixing and preventing the belt part, which has tied the cables, from loosening. The present invention makes it possible to conveniently arrange the cables without using a special tool, and over consumption of the belt part can be prevented as compared to a conventional cable tie 100 in which the leftovers of the belt part 130 after it is cut are discarded. In case of the conventional cable tie 100, the cable tie 100 should be used depending on the thickness of the cables to be arranged; however in the present invention, the belt part 310 is unwound as much as the needed length long enough to tie the cables, and the cables are tied, and the belt part 310 is tightened and cut, and the remaining leftovers are wound on the reel 370 and are stored. So, it does not need to carry various types of cable ties during the cable arranging work, and the leftovers of the belt part 310 can be effectively stored.

## Description

The present invention relates to a cable tie which makes it possible of cleanly arrange a plurality of cables or wires by tying them, and in particular to a cable tie and a cable tie device which help easily tie cables by adjusting them as much as a user wants irrespective of the kinds of cables to be tied or the thickness of an object.

### Background Art

A cable tie is widely used at home and in the industry field for the purpose of tying and cleanly arranging a plurality of cables which are randomly put.

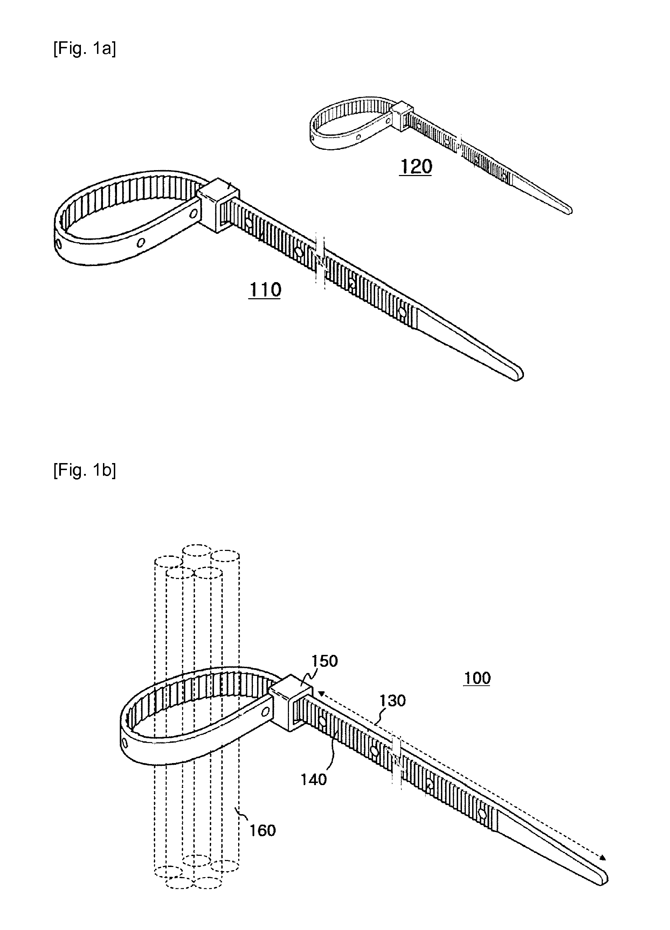

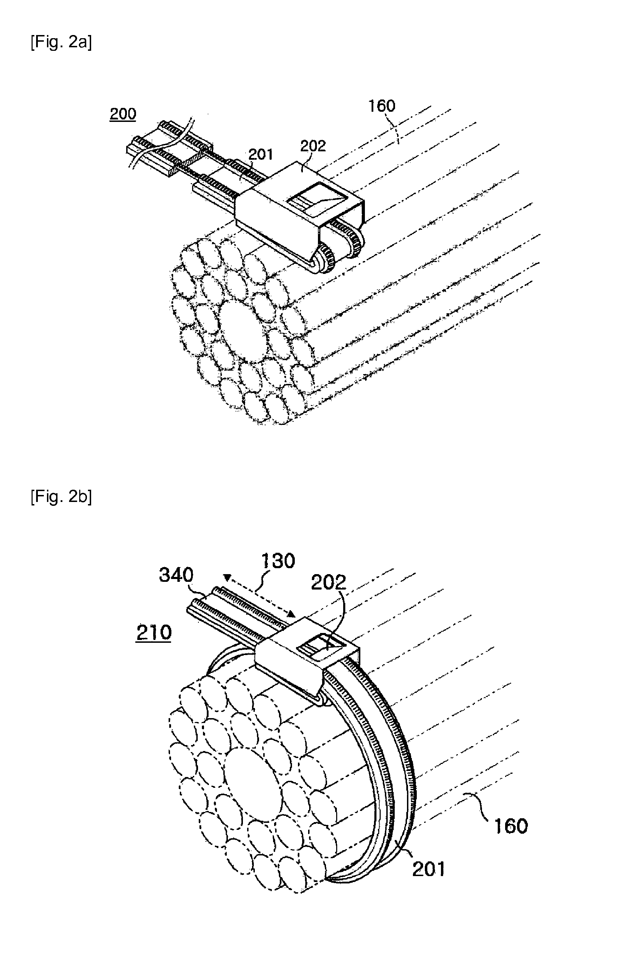

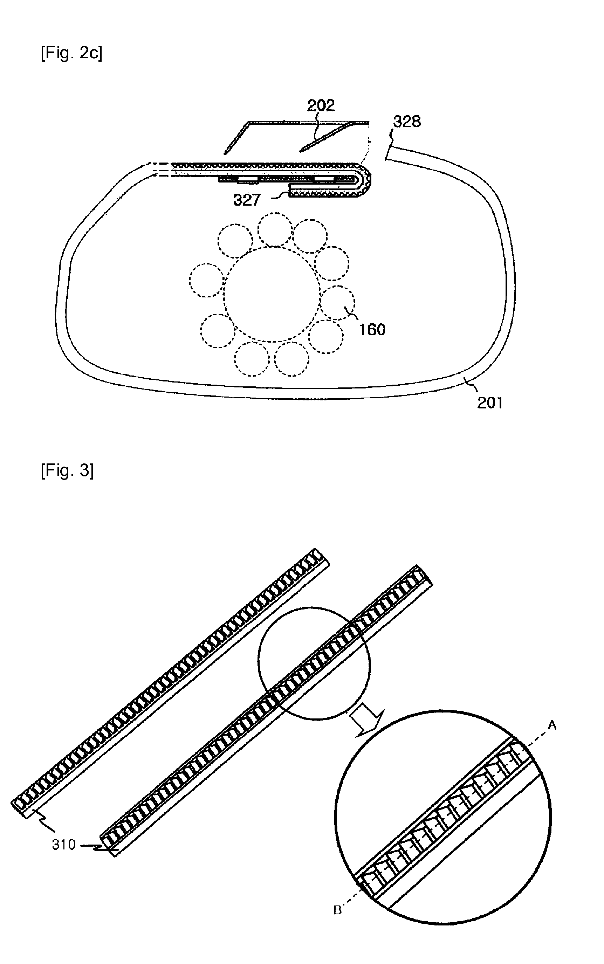

As shown in Figures 1a and 1b, a conventional cable tie is characterized in that a belt part 140 covering cables and an engaging head part 150 fixing the belt part from not slipping are integrally engaged, and various cable tie products such as a short cable tie 120 or a long cable tie 110 are used depending on the thickness of a cable to be tied, which causes a problem when in use, and since the remaining portions of the belt part 130 after it is cut are waste for thereby causing an over consumption of cables. At home or in the industry fields, it is needed to clean the wasted portions after a cable is cleanly arranged and cut. In order to improve the above mentioned problems, according to a Korean patent registration number 0845579, as shown in Figures 2a, 2b, and 2c, the belts are cut as much as needed depending on the surrounding length of each cable fixing and tying a belt part start end portion 327at an engaging head part 202, and the cables are surrounded and tied, and the cut belt end portion 328 is fixed at the engaging head part 202, which construction might help reduce the wasting portions of the belt parts in such a way to cut the belt part as much as a user wants; however since it is possible to complete the tying work after the belt part is cut off in a state of a reel form 370 or a storage tying state before the final engagement, unless the surrounding of the cables to be tied are not accurately measured, the first cut belt part should be inserted into the engaging head part and is continuously pulled in the direction of the insertion for thereby tightening them, and after the tightening work, the unnecessary belt part passes through the engaging head part 202 and is protruded, so the portion 130 should be cut off and wasted in the following clean work, which causes an over consumption. Even when the surrounding of the cables to be tied is accurately measured, when doing the cable tying and arranging work with only the cables accurately cut as much as needed lengths, it is needed to tightly pull the belt part end while holding it and to surround it around the cables to be tied and to insert it into the engaging head part, which cause inconveniences during work. As described above, the conventional cable tie causes a lot of cable consumptions, and another conventional art which was aimed at improving the above mentioned problems still has a problem, not completely resolving the problems that cables are over consumed. In addition, the cable ties are generally manufactured in an extrusion method on a turnkey basis with the material of PVC or other character synthetic resin in consideration with the unit cost while manufacturing the shapes of the engaging head part. In this case, the flexibility of the belt part decreases owing to the natures of the materials, so many inconveniences occur when doing the work of tying cables, and the thickness of the belt part itself increases, so the whole thickness of the tied cables increases after they are arranged.

### Disclosure of Invention

Accordingly, it is an object of the present invention to provide a cable tie and a cable tie device which help a cable arranging work depending on a user's need irrespective of the number or the thickness of cables which need a tying and arranging work, and which help prevent over consumption occurring after the belt parts are cut during an arranging work.

To achieve the above objects, there is provided a cable tie and a cable tie device which are characterized in that the belt part and the engaging head part are separated, and toothed blades are formed at both sides of the belt part, and the engaging head part configured to effectively use the toothed blades is provided. In the above described construction, when arranging and tying the cables which are needed to be arranged, the belt part is first passed through the engaging head part, and the cables to be arranged are surrounded, and the belt part start end portion is fixed at the engaging head part for thereby enhancing workability and preventing over consumptions.

### Advantageous effects

According to the present invention, it is possible to do a cable arranging work with the lengths that a user wants irrespective of the thickness and the number of the cables to be tied during the cable arranging work, and the belt parts which are wasted after the cutting work do not occur.

### Brief Description of Drawings

Figures 1a and 1b are views illustrating conventional cable ties.

Figures 2a, 2b and 2c are views illustrating a conventional cable tie construction in which a belt part and an engaging part are separated.

Figure 3 is a view illustrating a cable tie belt part according to a preferred embodiment of the present invention.

Figure 4 is a view illustrating a cross section of a cable tie belt part according to a preferred embodiment of the present invention.

Figure 5 is a view illustrating a cable tie engaging head part according to a preferred embodiment of the present invention.

Figure 6 is a view illustrating a use state of a cable tie according to a preferred embodiment of the present invention.

Figure 7 is a view illustrating a use stage of a cable tie according to a preferred embodiment of the present invention.

Figure 8 is a view illustrating a cable tie engaging head part according to another preferred embodiment of the present invention.

Figure 9 is a view illustrating a construction that a cable tie engaging head part is partially cut along a curved surface according to further another preferred embodiment of the present invention.

Figure 10 is a view illustrating a use state of a cable tie according to further another preferred embodiment of the present invention.

Figure 11 is a view illustrating a use stage of a cable tie according to further another preferred embodiment of the present invention.

### Best modes for carrying out the invention

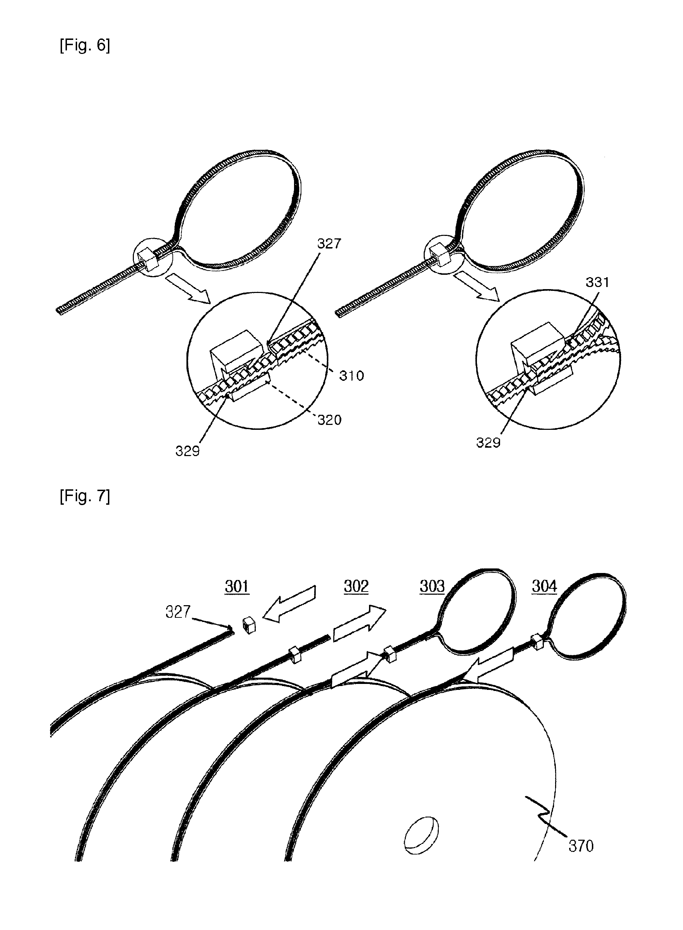

Figure 6 is a perspective view before and after a belt part 310 is inserted into an end inlet 331 of an engaging head part 320 after cables which are needed to be arranged are gathered together and are tied using a cable tie belt part 310 and an engaging head part 320 according to a preferred embodiment of the present invention. The start inlet 329 and the end inlet 331 of the engaging head part 320 according to a preferred embodiment of the present invention are positioned on the facing surfaces in the engaging head part 320. The belt part 310 is fixedly inserted into the engaging head part 320 via the end inlet 331 after it surrounds the cables to be tied after it passes through the start inlet 329 of the engaging head part 320. When the belt part 310 is fixedly inserted into the end inlet 331 of the engaging head part 320, the directions of the toothed blades between the contacting surfaces between the folded belt parts 310 surrounding the cables which are needed to be arranged are interfered with each other, so it is impossible to push the belt part start end portion 327 to contact with the stopper wall 326 via the end inlet 331 of the engaging head part 320, it is inserted long enough so that the belt part start end portion 327 can be easily inserted into the engaging head part end inlet 331, and when the engaging head part 320 is pushed in the direction of the folded belt part 310 while holding the contacting and folded belt part 310, and the engaging head part 320 moves, and the contacting and folded belt part 310 is introduced into the interior of the engaging head part 320, and consequently the belt part start end 327 comes into contact with the stopper wall 326 in the engaging head part, and the belt part start end portion 327 which was inserted into the interior of the engaging head part 320 is caught at the toothed blades 321 of the engaging head part and does not escape. When the belt part start end portion 327 is caught at the toothed blades 321 in the engaging head part and is fixed, the belt part 310 passing through the engaging head part 320 remains in a state that the toothed blades are engaged with each other at the folded surfaces with the contacting belt part start end portion 327, and the belt part 310 no longer passes through the engaging head part 320 via the start inlet 329; however since it is possible to pull and take out the belt part 310, which passed through the engaging head part 320, in the opposite direction that the start inlet 329 is passed, when the belt part 310 surrounding the cables, which are needed to be arranged after they are unwound via the engaging head part 320 long enough in their lengths for easier work is pulled in the opposite direction that the engaging head part start inlet 329 has passed, the cables to be arranged are tightened by means of the belt part 310 surrounding the cables, and after the cables are properly tightened, the belt part 310 fixed at the engaging head part 320 is cut just in front of the start inlet 329, the belt part 310 remaining after the belt part 310 is cut and used as much as needed in the cable arranging work is wound on the reel 310.

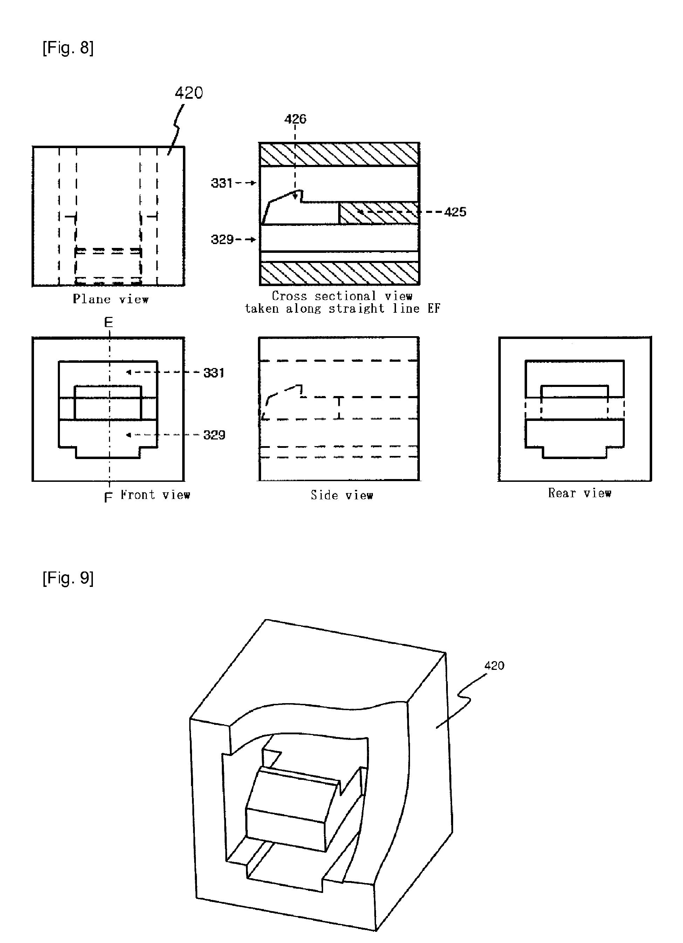

Figure 8 is a 2D view illustrating an engaging head part 420 according to another embodiment of the present invention. In the engaging head part 420 (hereinafter it is referred to the engaging head part 2) according to another embodiment of the present invention, the start inlet 329 which is an opening that the belt part 310 first passes through the engaging head part 2 (420) and the end inlet 331 which is an opening via which the belt part 310 is finally inserted into the final engaging head part 2 (420) are positioned on the same surfaces. In the interior of the engaging head part 2 (420), there is a separation plate 425 which separates a space where the belt part 310 passes through the start inlet 329 and a space where the belt part 310 is inserted into the end inlet 331 and is accommodated therein. The toothed blades 426 are formed at the end portions at the sides of the start inlet 329 and the end inlet 331 of the separation plate 425 in the passing space direction of the end inlet 331. The separation plate 425 in the engaging head part 2 (420) is connected to the wall of the opposite surface of the engaging head part 2 (420) of the sides of the start inlet 329 and the end inlet 331 or at portion of the wall of the side surface, the portions of the toothed blades 426 of the ends of the separation plate at the sides of the start inlet 329 and the end inlet 331 can be bent into the passing through space of the start inlet 329 or the insertion space of the end inlet 331.

### Modes for carrying out the invention

According to a first object of the present invention, there is provided a cable tie which comprises a belt part 310 having toothed blades in different directions at both sides so that a user can cut as much as he wants and can use, and engaging head parts 320 and 420 effectively tying both ends of the belt part, and such as it is possible to easily tie the separated engaging head parts 320 and 420 with the belt part 310 and to properly tighten the belt part which has tied the cables and to cut and use it.

According to a second object of the present invention, the belt part 310 is unwound from the reel 370 as much as needed lengths or the length needed in the work lest the belt part 310 wound on the reel 370 for the purpose of tying the cables is cut, and the start end portion 327 of the unwound belt part is passed through the through inlet 329 (hereinafter referred to the start inlet) of the engaging head parts 320 and 420, and the cables 160 to be tied are surrounded with the belt part 310 which has passed through the engaging head parts 320 and 420, and the start end portion 327 of the belt part 310 is fixedly inserted into the final mounting position inlet 331 (hereinafter refereed to the end inlet) of the engaging head parts 320 and 420, and the belt part 310 which has not passed through the engaging head parts 320 and 420 is pulled again in the opposite direction of the direction that it has passed through the engaging head part, so that the belt part 310 surrounding the cables 160 is properly tightened, and for easier work it can be pulled out of the engaging head parts 320 and 420 which has passed through the belt part 310 unwound much longer enough to tie the cables 160 to be tied and can be wound again on the reel 370, so the belt part 310 can be cut and used as much as necessarily needed to tie the cables, thus preventing over consumptions in an easier way in the method of arranging cables of the present invention.

According to a third object of the present invention, the functions of the belt part and the engaging head part of the conventional cable tie are substituted with the separated belt part 310 and engaging head parts 320 and 420 of the present invention, so the problems that the integrated belt part has a low flexibility and a thick thickness can be resolved which problems occur as the belt part of the conventional cable tie is integrally manufactured by a hard PVC extrusion molding method for the purpose of manufacturing the shape of the engaging head part, and since the belt part is independently manufactured, various kinds of materials can be used, and a small volume belt part can be manufactured with a material which is light and has a high tensional strength. Even when a lot of cable ties are needed for a cable tying work, the cable ties can be conveniently carried in a form of a small volume reel 370.

The preferred embodiments of the present invention will be described with reference to the accompanying drawings. When naming each element with a reference numeral, it is noted that the same elements are given the same reference numerals even when they are shown in different drawings. In addition, when it is judged that the detailed descriptions of the known construction or functions might make unclear the subject of the present invention, the descriptions thereof will be omitted.

Figures 1a and 1b are perspective views illustrating the construction of a conventional cable tie, of which Figure 1a is a perspective view illustrating a conventional cable tie having a short length and a cable tie having a long length. In the conventional cable tie, a relatively longer cable tie 110 is selectively used when the cables to be tied are bulky, and a relatively shorter cable tie 120 is used when the cables to be tied are thin.

Figure 1b is a perspective view illustrating a tying work of tying with a conventional cable tie. The conventional cable tie is characterized in that the belt part 140 and the engaging head part 150 are integrated, and after the cables are tied, the belt part has some leftover portions like 130.

Figure 2a is a perspective view illustrating another conventional cable tie in which an engaging head part and a belt part are separated, which has partially improved the common cable ties.

Figure 2b is a perspective view illustrating a state that the cables are tied with the conventional cable tie in which the engaging head part and the belt part are separated while partially improving the common cable tie. The start end portion 327 of the belt part is fixed at the separated engaging head part 202, and the cables to be tied with the belt part are surrounded and the cut belt part end portion 328 is properly inserted into the engaging head part 202 and is pulled and fixed for thereby finishing the tying work. The leftovers of the belt portion 130 are cut and discarded, if necessary, so the tying and arranging work is finished.

Figure 2c is a cross sectional view illustrating a construction that the cables are tied with the conventional cable tie in which the engaging head part and the belt part are separated while partially improving the common cable tie. As shown in Figure 2c, in order for the belt part end portion 328 to be fixed at the engaging head part 202, its end portion cannot have a reel 370. Only when it is previously cut, it can be inserted into the engaging head part 202. Due to the above mentioned features, it is hard to fully eliminate the leftovers which are discarded after the cable tie is engaged and cut off, and even when the portions which are cut in accurate lengths and are discarded are prevented, the work convenience in cable arrangements might be largely degraded.

Figure 3 is a perspective view illustrating a construction of a belt part 310 of a cable tie according to a preferred embodiment of the present invention. At both sides of the belt part are disposed toothed blades which have different directions from each other, and the winding directions of the reel 370 are different when it is used together with the engaging head part 320 of a preferred embodiment of the present invention and when it is used together with the engaging head part 420 according to another preferred embodiment of the present invention.

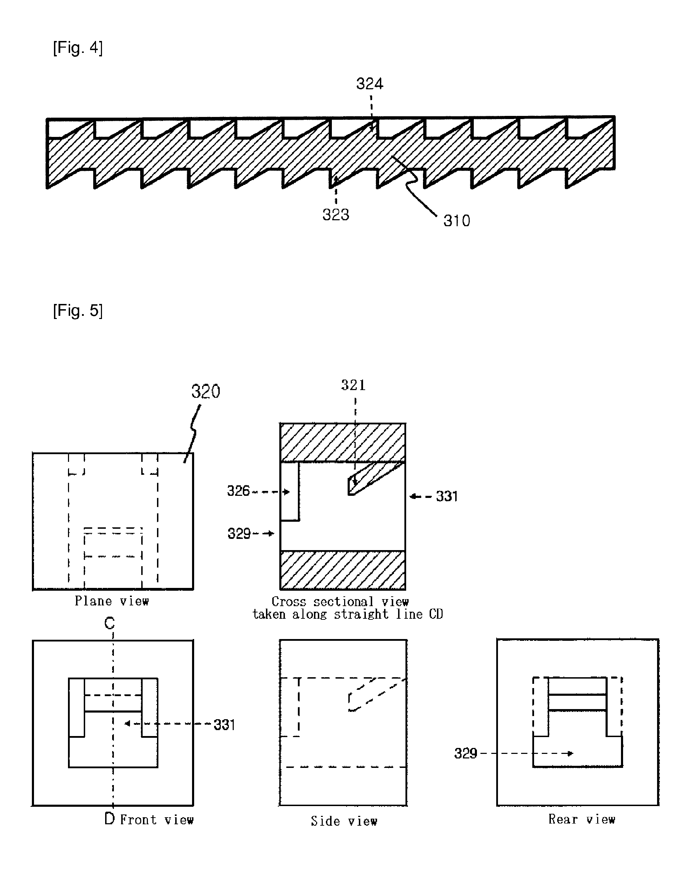

Figure 4 is a cross sectional view cut away along dotted line AB in the belt part 310 of the cable tie of Figure 3 according to a preferred embodiment of the present invention. As shown in Figure 4, at both sides of the belt part 310 are disposed toothed blades 323 and 324 which have different directions.

Figure 5 is a 2D view illustrating an engaging head part 320 of the cable tie according to a preferred embodiment of the present invention. As shown in Figure 5, the engaging head part 320 of the cable tie according to a preferred embodiment of the present invention has a space in its interior, in which the belt part 310 surrounds and ties the cables to be arranged in the direction of the start inlet 329 and is inserted in the direction of the end inlet 331. In addition, the engaging head part 320 has a toothed blade 321 on its inner surface for the purpose of preventing the belt part 310, which has been inserted in the direction of the end inlet 331, from escaping. As such, the belt part 310 inserted in the end inlet 331 does not protrude as it is blocked by means of the stopper wall 326 in the engaging head part 320, so it can be fixed in the engaging head part.

Figure 6 is a perspective view before and after the belt part 310 is inserted into the end inlet 331 of the engaging head part 320 after the cables to be arranged are tied with the belt part 310 and the engaging head part 320 of the cable tie according to a preferred embodiment of the present invention. The start inlet 329 and the end inlet 331 of the engaging head part 320 according to a preferred embodiment of the present invention are placed on the facing surfaces in the engaging head part 320. The belt part 310 passes through the start inlet 329 of the engaging head part 320 and surrounds the cables to be tied and is inserted into the engaging head part 320 via the end inlet 331 and is fixed. When the belt part 310 is fixedly inserted into the end inlet 331 of the engaging head part 320, the toothed blade directions are inter-engaged between the contacting surfaces folded while surrounding the cables to be arranged, so it is hard to push the start end 327 of the belt part to contact with the stopper wall 326 via the end inlet 331 of the engaging head part 320. So, the start part 327 of the belt part is pushed long enough to be easily inserted into the end inlet 331 of the engaging head part, and the engaging head part 320 is pushed in the direction of the belt part 310 while holding the facing and folded belt part 310, so the engaging head part 320 moves, and the folded belt 310 is introduced into the interior of the engaging head part 320. Consequently, the start end 327 of the belt part comes into contact with the stopper wall 326 of the engaging head part, and the start end 327 of the belt part inserted in the interior of the engaging head part 320 is caught at the toothed blade 321 in the engaging head part and does not escape. When the start end portion 327 of the belt part is fixedly caught at the toothed blades 321 in the interior of the engaging head part, the belt part 310 passing through the engaging head part 320 remains with the toothed blades being engaged on the surface folded with the start end 327 of the contacting belt part, so the belt part 310 no more passes through the engaging head part 320 via the start inlet 329; however since the belt part 310 which has passed through the engaging head part 320 can be pulled out in the opposite direction that the start inlet 329 is passed, when the belt part 310 loosened via the engaging head part 320 a certain length long enough for an easier work and surrounding the cables to be arranged is pulled out in the opposite direction that it has passed through the start inlet 329 of the engaging head part, the cables to be arranged are tightened by means of the belt part 310 surrounding cables. After the cables to be arranged are properly tightened, the belt part 310 fixed at the engaging head part 310 is cut just in front of the start inlet 329, so the belt part 310 cut as much as needed for the cable arranging work is used, and the leftovers of the belt part 310 can be wound again on the reel 370.

Figure 7 is a flow chart of a work process of tying the cables to be arranged using the belt part 310 and the engaging head part 320 according to a preferred embodiment of the present invention. As seen at 301 of the flow chart, the belt part wound in a form of the reel 370 is unwound, and the start end portion 327 is passed through the start inlet 329 of the engaging head part 320, and is made to the form of 302 and surrounds the cables to be tied, and is pushed toward the folded belt part 310 surrounding the cables for thereby forming a fixed knot like the form of 304. Afterward, the belt part 310 is properly pulled in the opposite direction that it has passed through the engaging head part 320 depending on the thickness of the tied cables and is pulled out of the engaging head part 320, and the knot is tightened for thereby finishing the cable tying work, and the belt 310 remaining wound on the reel is cut in front of the start inlet 329 of the engaging head part 320 for thereby finally finishing the cable arranging work.

Figure 8 is a 2D view illustrating an engaging head part 420 according to another embodiment of the present invention. In the engaging head part 420 (hereinafter referred to engaging head part 2) according to another embodiment of the present invention, the start inlet 329 which is an opening past which the belt part 310 first passes through the engaging head part 2 (420) and the end inlet 331 which is an opening where the belt part 310 is inserted into the final engaging head part 2 (420). In the interior of the engaging head part 2 (420), there is a separation plate 425 which separates a space past which the belt part passes through the start inlet 329 and a space in which the belt part 310 is inserted into the end inlet 331 and is accommodated. At the end portions of the start inlet 329 and the end inlet 331 of the separation plate 425 is formed the toothed blades 426 in the direction of the space that the end inlet 331 is passed. The separation plate 425 in the engaging head part 2 (420) is connected to the wall of the opposite surface of the engaging head part 2 (420) at the sides of the start inlet 329 and the end inlet 331 or is partially connected to the side surface of it, so the portion of the toothed blades 426 of the end of the separation plate at the sides of the start inlet 329 and the end inlet 331 can be elastically bent into the through space of the start inlet 329 or the insertion space of the end inlet 331.

Figure 9 is a perspective view illustrating a construction after the engaging head part 2 (420) is partially cut along the curved surface so as to well shown the 3D features of the engaging head part 2 (420) according to anther preferred embodiment of the present invention.

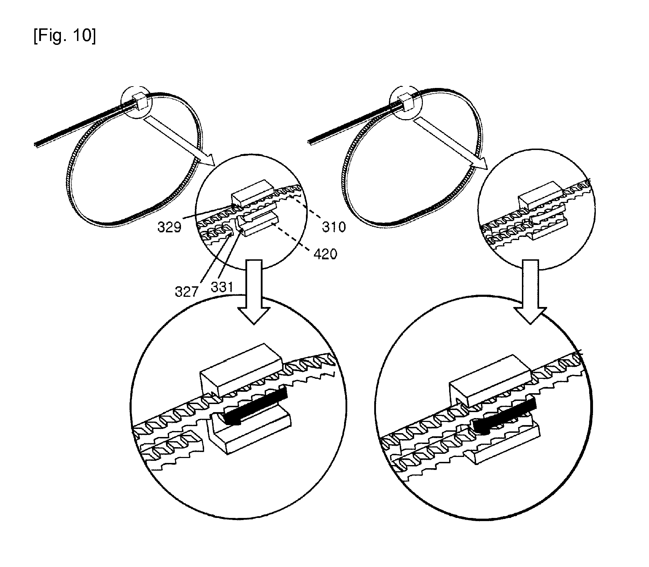

Figure 10 is a perspective view before and after the belt part 310 is inserted into the end inlet 331 of the engaging head part 2 (420) after the cables to be arranged are surrounding using the engaging head part 2 (420) and the belt part 310 according to another embodiment of the present invention. The belt part 310 passes through the engaging head part 2 (420) via the start inlet 329 and surrounds the cables to be arranged, and is inserted via the end inlet 331 of the engaging head part 2 (420) and is fixed. When inserting the start end portion 327 of the belt via the start inlet 329 of the engaging head part 2 (420) for the purpose of tying the cables to be arranged, the separation plate 425 in the engaging head part 2 (420) remains parallel from the passing through direction, so a space large enough in order for the belt part 310 to pass through the engaging head part 2 (420) is obtained. Therefore, there is no problems for the belt part 310 to passes through the engaging head part 2 (420) via the start inlet 329. The cables to be arranged are surrounded with the thusly passing through belt part 310, and the start end portion 327 of the belt is inserted into the end inlet 331 of the engaging head part 2 (420), so that the inserted start end portion 327 of the belt does not escape by means of the toothed blades 426 formed at the end of the separation plate 425 in the engaging head part 2 (420). In addition, the start end 327 of the belt is inserted into the interior of the engaging head part 2(420) via the end inlet 331, so it is pushed owing to the thickness of the belt part 310 into which the toothed blades 426 of the end of the separation plate 425 in the engaging head part 2(420), and then the separation plate 425 is pushed toward the through space of the start inlet 329 in the engaging head part 2(420) and is bent, and the corner portion at the side of the start inlet 329 of the bent separation plate 425 pressurizes the belt part 310 which passes through the start inlet 329 of the engaging head part 2(420) while being caught at the shoulders of the toothed blades of the passing belt part 310, so the belt part 310 no more moves in the passing direction via the start inlet 329; however in this state, the belt part 310 can be withdrawn in the opposite direction that the belt part 310 has passed through the start inlet 329 of the engaging head part 2(420) owing to the directional configuration between the toothed blades of the belt part 310 passing through the engaging head part 2(420) and the corner of the separation plate 425 caught at the toothed blades of the belt part. In a state that the knot surrounding the cables is formed, the belt part 310 surrounding the cables to be arranged after they are unwound and loosened via the engaging head part 2(420) with a lot of surplus lengths for easier work is pulled in the opposite direction that the start inlet 329 of the engaging head part 2(420) is passed through and is withdrawn, so the cables to be arranged are tightened by means of the belt part 310 surrounding the cables, and after the cables to be arranged are properly tightened, the belt part 310 fixed at the engaging head part 2(420) is cut just in front of the start inlet 329, and the belt part 310 remaining after the belt part 310 was used as much as needed for the cable arranging work is wound on the reel 370.

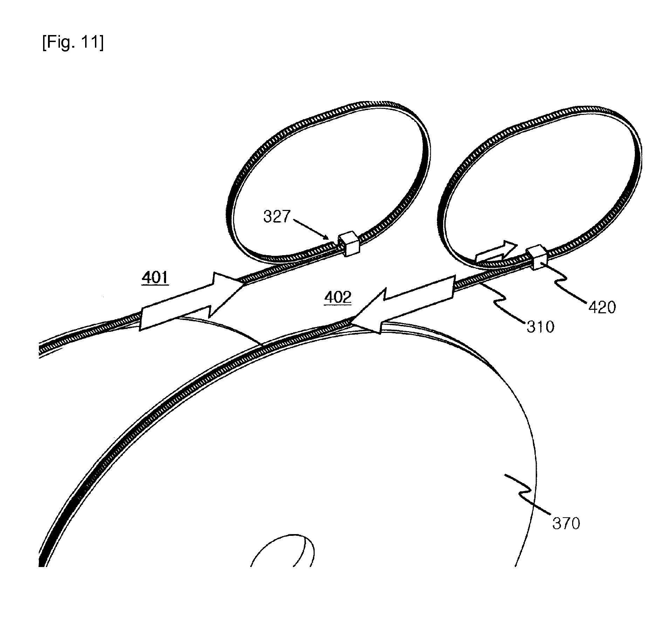

Figure 11 is a flow chart of a work process of tying the cables, which are to be arranged, with the belt part 310 and the engaging head part 2(420) according to another embodiment of the preset invention. The winding direction of the belt part 310 wound on the belt reel 370 of Figure 11 is opposite to the winding direction of the belt part 310 wound on the belt reel 370 of Figure 7. Like 401 in the flow chart, the belt part 310 wound in the shape of the reel 370 is unwound, and the start end portion 327 is passes through the start inlet 329 of the engaging head part 2(420) and surrounds the cables to be arranged, and the start end portion 327 of the belt part 310 is inserted into the end inlet 331 of the engaging head part 2(420) for thereby obtaining the configuration of 402, and the belt part 310 having passed via the engaging head part 2(420) so as to surround the cables, which are to be arranged, with enough lengths for an easier arranging work is pulled and withdrawn from the engaging head part 2(420) in the opposite direction that it has passed via the start inlet 329 of the engaging head part 2(420) depending on the thickness of the cables. When the belt part 310 is pulled and withdrawn in the above mentioned manner, the belt part 310 surrounding the cables to be arranged properly tightens and ties the cables, and the belt part 310 fixed at the engaging head part 2(420) in a properly tightened state is cut just in front of the start inlet 329 of the engaging head part 2(420) for thereby finishing the cable arranging work. The belt part 310 remaining after a cutting work is wound on the reel 370 without leaving leftovers.

As the present invention may be embodied in several forms without departing from the spirit or essential characteristics thereof, it should also be understood that the above-described examples are not limited by any of the details of the foregoing description, unless otherwise specified, but rather should be construed broadly within its spirit and scope as defined in the appended claims, and therefore all changes and modifications that fall within the meets and bounds of the claims, or equivalences of such meets and bounds are therefore intended to be embraced by the appended claims.

### Industrial applicability

The present invention can be well applied for the purpose of arranging cables in the course of various manufacture parts used for cables and can be applied for the use at home.

## Claims

1. A cable tie which includes a belt part 310 surrounding electric cables or ordinary cables, and engaging head parts 320 and 420 fixing the belt part so that the electric cables or ordinary cables remains surrounded by the belt part, comprising:
toothed blades 323 and 324 which are arranged in different directions at both sides of the belt part,
the start inlet of the belt part surrounding the electric cables or ordinary cables via the start inlet 329 of the engaging head part and being inserted into an end inlet 331 of the engaging head part.

2. A cable tie according to claim 1, wherein said belt part is fixed so that the belt part inserted in the end inlet does reliably fits a volume-reduced space of the engaging head part and does not escape from it when the belt part is inserted into the end inlet of the engaging head part after the belt part surrounds the cables to be arranged as the empty space in the interior of the engaging head part is reduced, the belt part having passed through the engaging head part in the interior of the engaging head part.

3. A cable tie according to claim 1, wherein said engaging head parts 320 and 420 are separate from the belt part 310.

4. A cable tie according to claim 1, wherein said toothed blades of both sides of the belt part are formed in protruded shapes.

5. A cable tie according to claim 1, wherein said toothed blades of both sides of the belt part are formed in concaved shapes.

6. A cable tie according to claim 1, wherein a toothed blade of one side of the belt part is formed in a protruded shape, and a toothed blade of the other side of the belt part is formed in a concaved shape.

7. A cable tie according to claim 1, wherein the start inlet and the end inlet of the engaging head part are placed on the facing surfaces of the engaging head part.

8. A cable tie according to claim 1, wherein the start inlet and the end inlet of the engaging head part are placed on the same surfaces of the engaging head part.

9. A cable tie according to claim 7, wherein the toothed blades of the belt part inserted in the end inlet 331 of the engaging head part is caught and is not withdrawn by means of the toothed blades 321 formed at the inner side of the engaging head part, and the belt part inserted in the end inlet of the engaging head part comes into contact with the belt part, which has passed via the start inlet 329 of the engaging head part, in the interior of the engaging head part, and when the toothed blades are engaged with each other on the contacting surfaces of two contacting surfaces, the belt can escape from the engaging head part in the opposite direction that the belt part has passed through the engaging head part via the start inlet, and in the engaged state, the belt part no more passes through the engaging head part via the start inlet in the direction that it has passed.

10. A cable tie according to claim 8, wherein in the interior of the engaging head part, a separation plates 425 separates a space accommodating the belt part passes through the start inlet of the engaging head part and a space accommodating the belt part which is inserted again via the end inlet of the engaging head part, and at the separation plate are formed toothed blades which hold the belt part inserted in the end inlet of the engaging head part for it no to escape, and the separation plate is configured in such a way that the side where the toothed blade is not formed is fixed at a body of the engaging head part, and the side where the toothed blades are formed is bent with a certain elasticity, and when the belt part is inserted into the end inlet of the engaging head part, the portion of the separation pate at the side of the toothed blade is pushed in a bent state into the space of the start inlet of the engaging head part with the aid of the height of the shoulder of the toothed blade formed at the separation plate and the thickness of the inserted belt part, and the engaging head part makes the belt part pass via the start inlet of the engaging head part when the belt part is not inserted into the end inlet of the engaging head part, and when the belt part is inserted into the end inlet of the engaging head part, the toothed blade formed at the separation plate of the engaging head part holds the toothed blade formed at the contacting surface of the belt part which has been inserted into the end inlet of the engaging head part for thereby preventing the belt part from escaping in the opposite direction that it is inserted into the end inlet of the engaging head part, and when the belt part is inserted into the end inlet of the engaging head part, as described above the separation plate is pushed toward the passing through space of the belt in the engaging head part by means of the height of the toothed blades of the separation plate of the engaging head part and the thickness of the belt part inserted into the end inlet of the engaging head part, and consequently, the bent separation plate pressurizes the belt part which passes through the start inlet of the engaging head part, and the toothed blades of the passing belt part is engaged with the corner of the separation plate, so the belt part passing through the start inlet of the engaging head part can be pulled and escape in the opposite direction that the engaging head part passes through, but can no longer pass.

11. A cable tie according to claim 9, wherein at said engaging head part is formed a stopper wall for the purpose of preventing the belt part inserted in the end inlet of the engaging head part from protruding and escaping from the engaging head part.

12. A cable tie according to claim 10, wherein at said engaging head part is formed a stopper wall for the purpose of preventing the belt part inserted in the end inlet of the engaging head part from protruding and escaping from the engaging head part.

13. A cable tie, comprising:
an engaging head part 320 fixing a belt part 310 which serve to tie a plurality of cables, and
said engaging head part including in its interior:
a through space through which the belt part passes; and
a space in which the start end portion 327 of the belt part surrounding the cables to be tied and having passed via the through space is folded with the passing belt part, and
an inner toothed blade 321 being formed at an inner surface of the engaging head part for the purpose of fixing the start end of the inserted belt part and preventing it from escaping.

14. A cable tie, comprising:
an engaging head part 420 fixing a belt part 310 which serve to tie a plurality of cables, and
said engaging head part 420 including in its interior:
a through space through which the belt part passes; and
a separation space 425 which is formed along the through space, and
a toothed blade 426 being formed at one side end of the separation plate.

15. A cable tie according to claim 14, wherein said separation plate 425 is connected to only a partial portion of the inner surface of the engaging head part 420 and has a certain elasticity.
